# EUROPEAN PATENT SPECIFICATION

(11) **EP 4 032 671 B1**
(45) Date of publication and mention of the grant of the patent: **29.11.2023**
(21) Application number: 21213812.7
(22) Date of filing: 10.12.2021
(51) Int. Cl.: B27B 5/065, B27G 19/02

(54) **METHOD FOR PICKING UP A PANEL FROM THE EXIT STATION OF A MACHINE FOR WORKING PANELS MADE OF WOOD AND THE LIKE AND MACHINE THEREOF**
VERFAHREN ZUM ENTNEHMEN EINES PANELS VON EINER AUSGABESTATION EINER MASCHINE ZUM BEARBEITEN VON PANELEN AUS HOLZ ODER ÄHNLICHEM, SOWIE MASCHINE DAFÜR
MÉTHODE DE PRÉLÈVEMENT D'UNE PANNEAU D'UNE STATION DE SORTIE D'UNE MACHINE À USINER DES PANNEAUX EN BOIS OU SIMILAIRES ET MACHINE ASSOCIÉE

(30) Priority: 29.12.2020 IT 202000032591
(43) Date of publication of application: 27.07.2022
(73) Proprietor: SCM Group S.p.A., 47921 Rimini (RN) (IT)
(72) Inventor: MANDOLESI, Stefano, 47921 RIMINI (IT); OLIVA, Stefano, 47921 RIMINI (IT)
(74) Representative: Tiburzi, Andrea

(56) References cited:
- EP-A1- 3 081 325
- EP-A1- 3 533 572
- DE-U1-202010 011 924
- DE-U1-202011 101 666

## Description

The present invention relates to a method, according to the preamble of claim 1, for picking up a piece from the exit station of a machine for working pieces made of wood and the like.

The present invention also relates to a machine, according to the preamble of claim 5, for working wooden pieces and the like.

### Field of the invention

More in detail, the invention relates to a method of the aforementioned type, studied and implemented in particular to take a workpiece coming out of a machine for working pieces made of wood, but also made of ceramic, glass, fiberglass, plastic, metal, and the like, but which can be used for any machine for the working pieces, in which it is necessary to pick up a workpiece during, or at the end of the working steps of the same piece.

In the following, the description will be addressed to the working of wooden panels in a cutting machine, but it is clear that the same should not be considered limited to this specific use.

### Prior art

As it is known, there are currently machines for working pieces such as, for example, wooden panels, comprising one or more working stations arranged in series to cut the pieces according to different directions.

These cutting machines, known in the jargon as "sectioning machines", usually comprise a support surface for the piece, which develops along one direction, and a working station.

In particular, said known machines generally provide an input or loading station for arranging, manually or automatically, the panels to be worked, and an output or unloading station for picking up, manually or automatically, the panels worked by the machine.

Between said loading station and said unloading station there is the working station, which comprises a cutting unit, arranged below the working plane and which comprises at least one blade, which protrudes at least partially with respect to said working plane through a slot.

The transport between the two stations takes place through one or more grippers supported by one or more pushing groups.

In particular, each working station of the machine typically comprises a pressure member for blocking the panel in position during its machining, which takes place by means of said blade that cuts the piece along a cutting line, transversal with respect to the development direction of the support plane.

The cutting takes place due to the movement of said cutting unit along the cutting line.

The blade, moreover, is vertically movable between a rest position, in which it is arranged below said working plane, and a working position, in which it is arranged at least partially protruding with respect to said working plane.

Currently, in known machines, in which the pieces are unloaded manually, there are protection devices arranged along the cutting line, in order to protect the operator from the blade when it is in its working position, while, in the machines in which the unloading of the pieces takes place automatically, said protection devices are generally not present.

In particular, known machines, in which the unloading of the machined pieces is done manually by an operator, comprise, in correspondence with said cutting line, a protective member, capable of preventing the operator from accessing the area of the cutting line, where the blade works.

This protective member can also be used to prevent panel parts from escaping or expelling from the machine, for example, in the event of the panel breaking in one or more parts, to ensure the safety of the operator.

In particular, said protective member comprises a plurality of thin lamellae, called "strips", arranged along the cutting line of the working station and placed side-by-side.

Said strips are capable of moving away from and approaching to said cutting line, from a raised position, in which they leave uncovered said cutting line and therefore the blade, to a lowered position, in which they cover the blade during the working of the panel.

In known machines, in which the loading/unloading of the machined pieces takes place automatically, for example by means of a robot, said unloading station does not have any protection devices since, being no human operators, there is no need for protection of the cutting tool and any ejections of material would not be harmful to an operator.

Known machines can also work both in manual loading/unloading mode and in automatic loading/unloading mode.

In particular, when these machines work in manual loading/unloading mode by an operator, the need arises to guarantee the safety of the operator, as described above, therefore the work cycle of the machine includes the following steps:
- loading the panel on the working plane by an operator;
- positioning of the panel on the cutting line according to the cutting pattern to be carried out;
- lowering the **presser** on the panel to block the panel itself;
- lowering the safety strips;
- positioning of the blade in the operating position;
- executing the cut;
- positioning of the blade in the rest position;
- rising of the presser to release the cut panel and the uncut rest;
- rising of the safety strips; and
- unloading of the panel and any rest by an operator.

When the same machine works in automatic loading/unloading mode, the work cycle is exactly the same as described above for the manual loading/unloading mode, except for the loading and/or unloading step, which is performed by a robot or the like, rather than by an operator.

In particular, since there is no operator in the working area of the machine, the problems described above relating to the safety of an operator do not exist, and therefore the lowering and raising steps of the safety strips have a negative impact on the working times, thus increasing the working time due to unnecessary operations.

The prior art documents also comprises the patent applications EP 3 081 325 A1 and EP 3 533 572 A1 and the utility model applications DE 20 2011 101666 U1, which discloses the preambles of claims 1 and 5, and DE 20 2010 011924 U1.

### Scope of the invention

In the light of the above, it is, therefore, an object of the present invention to provide a method of removing a piece from the exit station of a machine for working wooden pieces and the like, which allows protecting the safety of an operator, in case of manual unloading.

Another object of the present invention is to provide a method that allows, in the case of automatic unloading, to carry out a correct picking up of the worked piece by the robot, minimizing or avoiding any delays in the working steps.

A further object of the present invention is to provide the tools necessary for carrying out the method and the apparatuses that carry out this method.

### Object of the invention

The invention provides a method, according to claim 1, for picking up a panel from the exit station of a machine for working panels made of wood, ceramic, glass, fiberglass, plastic, metal and the like, of the type comprising a working plane for supporting each panel, said panel being loadable and/or unloadable according to a first or a second loading and/or unloading way; at least one working unit comprising at least one working tool for working said panel, at least one locking member for locking said panel during working, at least one protective member, capable of preventing the contact between said at least one working tool and an operator, wherein when said panel is loaded and/or unloaded according to said first loading and/or unloading way, said method comprises the following steps: 1. placing said panel on said working plane in a predetermined position such as to allow its working; 2. locking, by means of said at least one locking member, said panel in a position on said working plane; 3. carrying out, by means of said at least one working tool, a working of said panel; 4. releasing, by means of said at least one locking member, said panel locked in the locking step 2.; and 5. picking up said panel worked in said working step 3.; and, when said panel is loaded and/or unloaded according to said second loading and/or unloading way, said method comprises the following sub-steps:
1.1 placing, after said placing step 1., said at least one protective member in a first position, wherein said at least one protective member forms a protective barrier of said working tool; and 3.1 placing, after said working step 3., said at least one protective member in a second position, wherein said at least one protective member uncovers said working tool.

Advantageously according to the invention, said method may comprise, before said placing step 1, the following further step: 0. detecting if said panel is loaded and/or unloaded according to said first loading and/or unloading way or according to said second loading and/or unloading way.

Always according to the invention, said first loading and/or unloading way is an automatic loading and/or unloading way of said panel is, carried out by means of an automatic picking up device, in particular a robot, and said second loading and/or unloading way is a manual loading and/or unloading way carried out by an operator.

Still according to the invention, said method may comprise, before said placing step 1., the following preliminary step: - storing one or more working programs to be carried out on each panel.

Conveniently according to the invention, said method may comprise, after said picking up step 5., the following further step: 6. exchanging operation data of said machine with one or more mobile electronic devices and/or a cloud infrastructure.

The present invention also provides a machine for working panels made of wood, ceramic, glass, fiberglass, plastic, metal and the like, comprising a panel loading station; a working plane for supporting at least one panel; a moving system for moving said panel from said loading station towards a working unit; a working unit comprising a cutting group comprising in turn at least one working tool for cutting said panel along a cutting line; at least one locking member for locking said panel during working; at least one protective member, capable of preventing the contact between said at least one working tool and an operator; one logic control unit configured for carrying out the preliminary step and the method steps according to anyone of the preceding claims.

Conveniently according to the invention, said logic control unit may be configured for selecting a loading and/or unloading way between said first and second loading and/or unloading way.

Always according to the invention, said method may comprise at least one sensor configured for detecting the presence of an operator in a determined area of said machine and for sending a signal of presence/absence of said operator to said logic control unit, and said logic control unit may be configured for selecting a loading and/or unloading way between said first and second loading and/or unloading way according to said signal of presence/absence of said operator received by said at least one sensor.

Advantageously according to the invention, said machine may comprise a control panel operationally connected to said logic control unit, wherein said control panel comprises selecting means for allowing said operator to select a loading and/or unloading way between said first and second loading and/or unloading way.

The present invention also provides a computer program comprising instructions that, when the program is carried out by a computer, they cause the execution of the method steps.

The present invention also provides a storage means that can be read by a computer comprising instructions that, when carried out by a computer, they cause the execution of the method steps.

### Brief description of the figures

The present invention will be now described, for illustrative but not limitative purposes, according to its preferred embodiments, with particular reference to the figures of the enclosed drawings, wherein:
figure 1 shows a perspective view of a machine for working pieces made of wood and the like, in which an embodiment of the method according to the present invention is implemented;
figure 2 shows a sectional view of the machine of figure 1 in manual unloading configuration, in which a protective member is in an operative position and a pressure member in a lowered working position;
figure 3 shows a further sectional view of the machine of figure 1 in an automatic unloading configuration, in which the protective member is in a rest position and the pressure member is in the lowered working position;
figure 4 shows a further sectional view of the machine of figure 1 in an automatic unloading configuration, in which the protective member is in the rest position and the pressure member is in a raised rest position; and
figure 5 shows a block diagram of an embodiment of the method according to the present invention.

In the various figures, similar parts will be indicated with the same numerical references.

### Detailed description

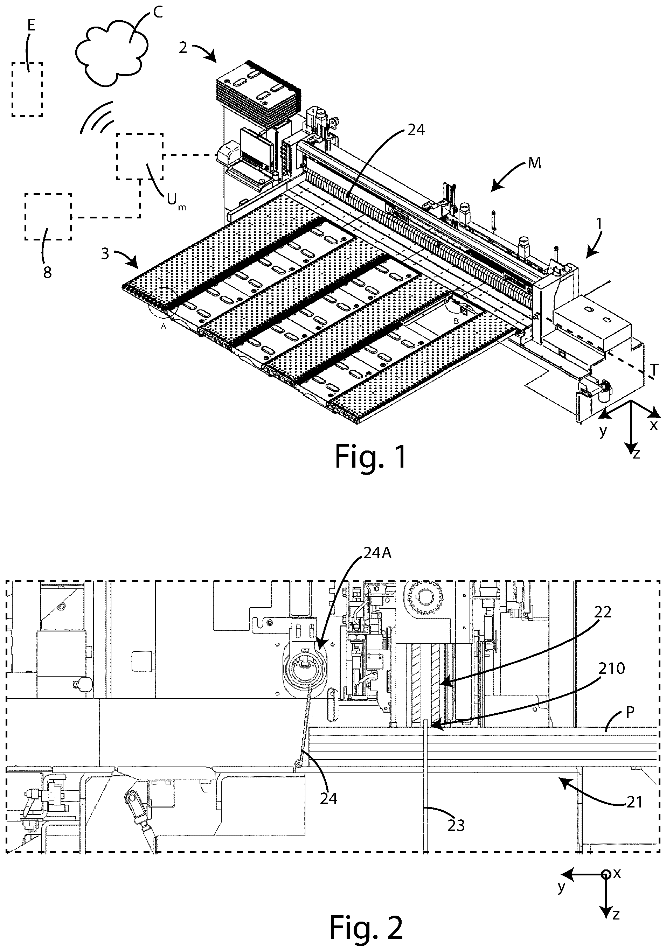

With reference to figure 1, the machine for working pieces, such as panels P made of wood, ceramic, glass, fiberglass, plastic, metal, and the like, globally indicated with the reference letter M, substantially comprises an entry or loading station 1 of said panels P, a working unit 2 to perform a respective working on said panels P, an output or unloading station 3, and a logic control unit U_{M}, in which machining programs to be performed on the panels P are stored.

In the embodiment described, the machine M is a cutting machine. However, the machine M can be a machine of a different type, without thereby departing from the scope of protection of the present invention.

The panels P to be worked are arranged on a support plane (not shown in the figures) of said loading station 1, which develops along a second Y-axis of a Cartesian reference system XYZ shown in figure 1, and slide along an advancement direction, parallel to said second Y-axis, until they reach the working unit 2, by means of a thrust exerted by one or more pushing units (not shown in the figures), each of which can comprise one or more gripping and pushing elements, such as pliers to grasp and move the panel P to be machined.

The working unit 2 develops along a first X-axis, orthogonal to said second Y-axis, and substantially makes cuts on the panels P along a cutting line T parallel, or substantially parallel to said first X-axis.

In the embodiment disclosed there is one working unit 2. However, in other embodiments, two or more working units may be present.

In particular, the working unit 2 comprises a working plane 21 to allow the support of the panels P to be machined, which extends along the first X-axis.

As can be seen from figures 2-4, the working unit 2 comprises a locking member 22, such as a pressing member 22 and the like, arranged above said working plane 21.

More specifically, said pressing member 22 extends along said first X-axis and is movable along a third vertical Z-axis and orthogonal with respect to said first X-axis, between a rest position, in which said pressing member 22 is raised with respect to said working plane 21, and a working position, in which said pressing member 22 is approaching with respect to said plane work 21, in such a way as to lock the panels P to be machined between said working plane 21 and the same pressing member 22.

Furthermore, the working unit 2 comprises a cutting unit, which in its turn comprises a machining tool 23 for working said panels P arranged on said working plane 21.

In the present embodiment, the machining tool 23 is a circular blade. However, in other embodiments, the machining tool 23 may be different from what is described.

In particular, the cut takes place thanks to the displacement of said cutting unit along the cutting line T. Furthermore, the machining tool 23 is vertically movable between a rest position, in which it is arranged below the working plane 21, laterally at one end of said cutting line, and a working position, in which it is arranged at least partially protruding with respect to said working plane 21.

More specifically, the circular blade 23 lies on a plane XZ defined by the first X-axis, and from the third Z-axis, protruding from said working plane 21, in its working position, through a slot 210 for a given portion, to cut each panel P along the cutting line T.

Furthermore, the circular blade 23 is rotatable about a rotation axis orthogonal to said XZ plane and, therefore, parallel to said second Y-axis, in its turn orthogonal to said first X and third Z-axis.

The working unit 2 comprises movement means (not shown in the figures) capable of rotating said circular blade 23 around its rotation axis.

The working unit 2 comprises a protective member 24, capable of preventing, when in use, the escape of parts of said panel P from said machine M.

In the present embodiment, the protective member 24 comprises a plurality of strips or strips 24, all arranged side by side.

However, in other embodiments of the present invention, the protective member 24 can be different from what is described, for example, made by means of a single element.

In particular, each strip 24 is movable between a first position or lowered position, in which it at least partially covers the machining tool 23, to a second position or raised position, in which it leaves said machining tool 23 uncovered.

In the lowered position, each strip 24 is arranged parallel or substantially parallel to the XZ plane, while, in said raised position, each strip 24 is arranged parallel or substantially parallel to an XY plane.

More in detail, with particular reference to figure 2, when each strip 24 is in said lowered position, all the side-by-side strips 24 form a protective barrier of said working tool 23, and also prevent the possible ejection of one or more parts of said panel P, when the latter is worked by said working tool 23.

When, on the other hand, each strip 24 is in said raised position, the working tool 23 is uncovered, and an operator or a mechanical arm can approach the working unit 2 and pick up the panel P machined by said working tool 23 to carry out any subsequent machining or to arrange the same panel P in one or more storage units.

The working unit 2 comprises a shaft 24A, the development axis of which is arranged parallel or substantially parallel to the first X-axis, connected to one end of each strip 24, to move each strip 24 between said lowered position and said raised position.

In particular, following the rotation of said shaft 24A, each strip 24 is capable of passing from the lowered position to the raised position and vice versa.

The panels P machined by the working unit 2 of the machine M reach a support plane of said unloading station 3 and are picked up by an operator or a handling device D.

Said handling device D is substantially a mechanical arm or a *robot* with two or more axes.

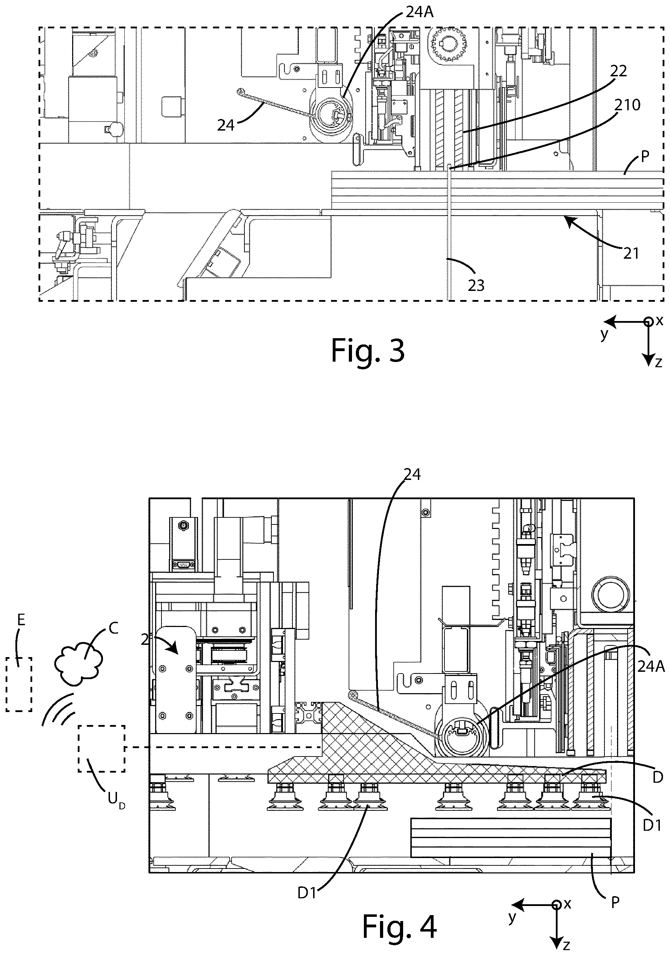

With reference to figure 4, said handling device D comprises a plurality of blocking and releasing devices D1 such as, for example, suction cups and the like.

The handling device D allows, when each strip 24 is in the raised position, to grip and, subsequently, release each panel P, moving it from one position to another, according to the needs.

Furthermore, the handling device D comprises a logic control unit U_{D}, capable of exchanging data with said logic control unit U_{M} of said machine M.

Said machine M may comprise or said logic control unit U_{M} of said machine M and logic control unit U_{D} of said handling device D can be connectable to mobile electronic devices E and/or a *cloud* C, such as a *server.*

By mobile electronic device E is meant any electronic device E, such as a *smartphone, tablet,* laptop, or the like.

Therefore, said logic control unit U_{M} of said machine M and/or said logic control unit U_{D} of said handling device D can be configured to send operating data of said machine M and/or said handling device D to said mobile electronic device E.

Furthermore, said logic control unit U_{M} of said machine M and/or said logic control unit U_{D} of said handling device D can be configured to send said operating data of said machine M and/or said handling device D also to a *cloud server* and the latter can be configured to send said data to said mobile electronic devices E.

Furthermore, as can be observed from figure 1, said machine M comprises a control panel 8 operatively connected to said control logic unit U_{M}, wherein said control panel 8 comprises display means and selection means (not shown in the figures), such as, for example, one or more buttons, to allow said operator to manually select loading and/or unloading mode between said first and second loading and/or unloading modes. In other embodiments of the present invention, this control panel 8 can be remotely controlled by the operator by means of any electronic device E, such as, for example, a *smartphone,* a *tablet,* a laptop or the like.

Furthermore, in the present embodiment, said control panel 8 is externally arranged with respect to said machine M. However, said control panel 8 can also be installed on said machine M without thereby departing from the scope of protection of the present invention.

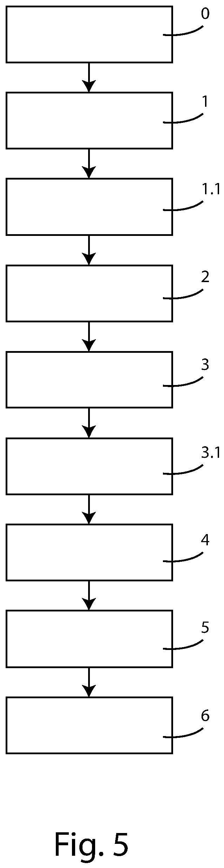

The operation of the method of removing a piece from the exit station of a machine for working wooden pieces and the like, shown in figure 5, is as follows.

Initially, when it is intended to perform a machining on at least one panel P, it is first of all necessary to arrange, manually or automatically, the panel P to be machined in said loading station 1, on said support surface 11.

In a preliminary step, one or more working programs to be carried out for each panel P, are stored.

In the detection step 0, it is detected whether the panel P has been loaded/unloaded with the first way, i.e., the automatic loading and/or unloading way performed by an automatic pick-up device, like a robot, or with the second way, that is with the manual loading/unloading way performed by an operator.

In particular, the control logic unit U_{M} is configured to select a loading and/or unloading way between said first and second loading and/or unloading ways.

More specifically, the machine M comprises at least one sensor configured to detect the presence of an operator in a given area and to send a presence/absence signal of said operator to said logic control unit U_{M}, which is configured to select a loading and/or unloading way between said first and second loading and/or unloading ways as a function of said presence/absence signal of said operator received by said at least one sensor.

In the case of manual loading/unloading way, said panel P is transported towards said working unit 2, and, in particular, it is arranged, in the positioning step 1, on the working plane 21, in correspondence with the working tool 23.

Subsequently, in step 1.1, each strip 24 is positioned in its respective lowered position so as to form a protective barrier of said working tool 23, at least partially or entirely covering said working tool 23.

Later, in blocking step 2, the pressing member 22 is positioned in the respective working position to lock the panel P to be machined between the same pressing member 22, and the underlying working plane 21.

Once the panel P is blocked in position, it is carried out, in the working step 3, the working of the panel P by means of the circular blade 23, according to the working program stored in said logic control unit U_{M}.

Following the panel P working, each strip 24 is positioned, in step 3.1, in the raised position, uncovering said machining tool 23, so as to allow the operator to pick up the panel P machined from said working unit 2.

In releasing step 4, the pressing member 22 is then positioned in the respective raised position in order to release the worked panel P.

In addition, in the picking up step 5, the worked panel P is picked up by the operator.

In the case of automatic loading/unloading way, the operating steps remain unchanged, except for the fact that the loading and/or unloading, which is carried out by means of said handling device D which grips and subsequently releases each panel P, by means of a plurality of blocking and release devices D1, moving the panel P from one position to another of the machine M, and except for the fact that there are no steps 1.1 and 3.1 for moving each strip 24, as said strips 24 remain always in said raised position, thus reducing the working time.

Finally, step 6 provides for an exchange of operating data of said machine M between the logic control unit U_{M} of said machine M and/or the logic control unit U_{D} of said handling device D and one or more mobile electronic devices E and/or a cloud infrastructure C.

### Advantages

An advantage of the method according to the present invention is that of guaranteeing the correct removal of the machined piece, avoiding, in the case of automatic operation, possible errors by the mechanical arm in picking up such piece from the exit station.

A further advantage is represented by the possibility of preserving the safety of an operator who approaches the machine during the machining of the piece.

Finally, a further advantage is the reduction of the working time in automatic loading/unloading mode, associated with the strips that are always stationary.

The present invention has been described for illustrative but not limitative purposes, according to its preferred embodiments, but it is to be understood that modifications and/or changes can be introduced by those skilled in the art without departing from the scope as defined in the enclosed claims.

## Claims

1. Method for picking up a panel (P) from the exit station (3) of a machine (M) for working panels (P) made of wood, ceramic, glass, fiberglass, plastic, metal and the like, comprising
a working plane (21) for supporting each panel (P), said panel (P) being loadable and/or unloadable according to a first and a second loading and/or unloading way;
at least one working unit (2) comprising at least one working tool (23) for working said panel (P),
at least one locking member (22) for locking said panel (P) during working,
at least one protective member (24), capable of preventing the contact between said at least one working tool (23) and an operator,
said method being **characterized**
**in that** said first loading and/or unloading way is an automatic loading and/or unloading way of said panel (P) is, carried out by means of an automatic picking up device (D), in particular a robot,
**in that** when said panel (P) is loaded and/or unloaded according to said first loading and/or unloading way, said method comprises the following steps:
*1.* placing said panel (P) on said working plane (21) in a predetermined position such as to allow its working;
*2.* locking, by means of said at least one locking member (22), said panel (P) in a position on said working plane (21);
*3.* carrying out, by means of said at least one working tool (23), a working of said panel (P);
*4.* releasing, by means of said at least one locking member (22), said panel (P) locked in the locking step 2.; and
*5*. picking up said panel (P) worked in said working step 3.;
**in that** said second loading and/or unloading way is manual loading and/or unloading way carried out by an operator, and
**in that**, when said panel (P) is loaded and/or unloaded according to said second loading and/or unloading way, said method comprises the following sub-steps:
*1.1* placing, after said placing step 1., said at least one protective member (24) in a first position, wherein said at least one protective member (24) forms a protective barrier of said working tool (23); and
*3*.*1* placing, after said working step 3., said at least one protective member (24) in a second position, wherein said at least one protective member (24) uncovers said working tool (23).

2. Method according to the preceding claim, **characterized in that** it comprises, before said placing step 1, the following further step:
*0*. detecting if said panel (P) is loaded and/or unloaded according to said first loading and/or unloading way or according to said second loading and/or unloading way.

3. Method according to any one of the preceding claims, **characterized in that** it comprises, before said placing step 1., the following preliminary step:
- storing one or more working programs to be carried out on each panel (P).

4. Method according to any one of the preceding claims, **characterized in that** it comprises, after said picking up step 5., the following further step:
*6*. exchanging operation data of said machine (M) with one or more mobile electronic devices (E) and/or a cloud infrastructure (C).

5. Machine (M) for working panels (P) made of wood, ceramic, glass, fiberglass, plastic, metal and the like, comprising
a panel loading station (P);
a working plane (21) for supporting at least one panel (P);
a moving system for moving said panel (P) from said loading station towards a working unit (2);
a working unit (2) comprising a cutting group comprising at least one working tool (23) for cutting said panel (P) along a cutting line (T);
at least one locking member (22) for locking said panel (P) during working; and
at least one protective member (24), capable of preventing the contact between said at least one working tool (23) and an operator;
**characterized by**
one logic control unit (UM) configured for carrying out the preliminary step and the method steps according to anyone of the preceding claims.

6. Machine (M) according to the preceding claim, **characterized in that** said logic control unit (UM) is configured for selecting a loading and/or unloading way between said first and second loading and/or unloading way.

7. Machine (M) according to the preceding claim, **characterized**
**in that** it comprises at least one sensor configured for detecting the presence of an operator in a determined area of said machine (M) and for sending a signal of presence/absence of said operator to said logic control unit (UM), and
**in that** said logic control unit (UM) is configured for selecting a loading and/or unloading way between said first and second loading and/or unloading way according to said signal of presence/absence of said operator received by said at least one sensor.

8. Machine (M) according to any one of claims 5-7, **characterized in that** it comprises a control panel (8) operationally connected to said logic control unit (UM), wherein said control panel (8) comprises selecting means for allowing said operator to select a loading and/or unloading way between said first and second loading and/or unloading way.

9. Computer program comprising instructions that, when the program is carried out by a computer, they cause the execution of the method steps according to any one of claims 1-4 by the computer.

10. Storage means that can be read by a computer comprising instructions that, when carried out by a computer, they cause the execution of the method steps according to any one of claims 1-4 by the computer.

## Patentansprüche

1. Verfahren zum Aufnehmen einer Platte (P) aus der Ausgabestation (3) einer Maschine (M) zur Bearbeitung von Platten (P) aus Holz, Keramik, Glas, Glasfaser, Kunststoff, Metall und dergleichen, umfassend eine Arbeitsebene (21) zum Tragen jeder einzelnen Platte (P), wobei die besagte Platte (P) gemäß einer ersten und einem zweiten Lade- und/oder Entladeart geladen und/oder entladen werden kann; mindestens eine Arbeitseinheit (2) umfassend mindestens ein Arbeitswerkzeug (23) zum Bearbeiten der besagten Platte (P), und mindestens ein Verriegelungselement (22) zum Verriegeln der besagten Platte (P) während der Bearbeitung, sowie mindestens ein Schutzelement (24), das den Kontakt zwischen dem besagten mindestens einen Arbeitswerkzeug (23) und einem Bediener verhindern kann, wobei das besagte Verfahren **dadurch gekennzeichnet ist, dass** die besagte erste Art des Ladens und/oder Entladens eine automatische Art des Ladens und/oder Entladens der besagten Platte (P) ist, die mittels einer automatischen Aufnahmevorrichtung (D), insbesondere eines Roboters, durchgeführt wird, und dass, wenn die besagte Platte (P) gemäß der besagten ersten Art des Ladens und/oder Entladens geladen und/oder entladen wird, das besagte Verfahren die folgenden Schritte umfasst:
1. platzieren der besagten Platte (P) auf der besagten Arbeitsebene (21) in einer vorbestimmten Position, um ihre Bearbeitung zu ermöglichen;
2. Verriegelung der besagten Platte (P) in einer Position auf der besagten Arbeitsebene (21) durch das besagte mindestens eine Verriegelungselement (22);
3. Durchführen einer Bearbeitung der besagten Platte (P) mit Hilfe des besagten mindestens einen Bearbeitungswerkzeugs (23);
4. Freigabe, durch das besagte mindestens eine Verriegelungselement (22), der besagten Platte (P), die in der Verriegelungsstufe 2 verriegelt wurde; und
5. Aufnehmen der besagten Platte (P), die im besagten Arbeitsschritt 3 bearbeitet wurde; wobei die besagte zweite Lade- und/oder Entladeart eine manuelle Lade- und/oder Entladeart ist, die von einem Bediener durchgeführt wird, und wobei, wenn die Platte (P) gemäß der besagten zweiten Lade- und/oder Entladeart geladen und/oder entladen wird, das Verfahren die folgenden Unterschritte umfasst:
*1*.*1*. Platzieren, nach dem besagten Platzierungsschritt 1., des besagten mindestens einen Schutzelements (24) in einer ersten Position, wobei das besagte mindestens eine Schutzelement (24) eine Schutzbarriere für das besagte Arbeitswerkzeug (23) bildet; und
*3*.*1*. Platzieren, nach dem besagten Arbeitsschritt 3., des besagten mindestens einen Schutzelements (24) in einer zweiten Position, wobei das besagte mindestens eine Schutzelement (24) das besagte Arbeitswerkzeug (23) freilegt.

2. Verfahren nach dem vorhergehenden Anspruch, **dadurch gekennzeichnet, dass** es vor dem besagten Schritt 1 des Platzierens den folgenden weiteren Schritt umfasst:
0. Erfassen, ob die besagte Platte (P) entsprechend der besagten ersten Lade- bzw. Entladeart oder entsprechend der besagten zweiten Lade- bzw. Entladeart beladen und/oder entladen wird.

3. Verfahren nach einem der vorhergehenden Ansprüche, **dadurch gekennzeichnet, dass** es vor dem besagten Schritt 1., des Platzierens den folgenden vorbereitenden Schritt umfasst:
- ein oder mehrere Arbeitsprogramme zu speichern, die an jeder Platte (P) auszuführen sind.

4. Verfahren nach einem der vorhergehenden Ansprüche, **dadurch gekennzeichnet, dass** es nach dem besagten Aufnahmeschritt 5., den folgenden weiteren Schritt umfasst:
*6*. Austausch von Betriebsdaten der besagten Maschine (M) mit einem oder mehreren mobilen elektronischen Geräten (E) und/oder einer Cloud-Infrastruktur (C).

5. Maschine (M) zur Bearbeitung von Platten (P) aus Holz, Keramik, Glas, Glasfaser, Kunststoff, Metall und dergleichen, umfassend eine Plattenladestation (P); eine Arbeitsebene (21) zum Stützen mindestens einer Platte (P); ein Bewegungssystem zum Bewegen der besagten Platte (P) von der besagten Ladestation zu einer Arbeitseinheit (2); eine Arbeitseinheit (2) mit einer Schneidgruppe, die mindestens ein Arbeitswerkzeug (23) zum Schneiden der besagten Platte (P) entlang einer Schnittlinie (T) umfasst; mindestens ein Verriegelungselement (22) zum Verriegeln der besagten Platte (P) während der Arbeit; und mindestens ein Schutzelement (24), das den Kontakt zwischen dem besagten mindestens einen Arbeitswerkzeug (23) und einem Bediener verhindern kann; **gekennzeichnet durch** eine logische Steuereinheit (UM), die so konfiguriert ist, dass sie den Vorschritt und die Verfahrensschritte nach einem der vorhergehenden Ansprüche durchführt.

6. Maschine (M) nach dem vorhergehenden Anspruch, **dadurch gekennzeichnet, dass** die besagte logische Steuereinheit (UM) so konfiguriert ist, dass sie eine Be- und/oder Entladeart zwischen der besagten ersten und zweiten Be- und/oder Entladeart auswählt.

7. Maschine (M) nach dem vorhergehenden Anspruch, **dadurch gekennzeichnet, dass** sie mindestens einen Sensor umfasst, der so konfiguriert ist, dass er die Anwesenheit eines Bedieners in einem bestimmten Bereich der besagten Maschine (M) erfasst und ein Signal der Anwesenheit/Abwesenheit des Bedieners an die besagte logische Steuereinheit (UM) sendet, und dass die besagte logische Steuereinheit (UM) so konfiguriert ist, dass sie eine Belade- und/oder Entladeart zwischen der besagten ersten und zweiten Belade- und/oder Entladeart auswählt, entsprechend dem von dem besagten mindestens einen Sensor empfangenen besagten Signal der Anwesenheit/Abwesenheit des besagten Bedieners.

8. Maschine (M) nach einem der Ansprüche 5-7, **dadurch gekennzeichnet, dass** sie ein Steuerpult (8) umfasst, dass im Betrieb mit der besagten logischen Steuereinheit (UM) verbunden ist, wobei das besagte Steuerpult (8) Auswahlmittel umfasst, die es dem besagten Bediener ermöglichen, eine Be- und/oder Entladeart zwischen der besagten ersten und zweiten Be- und/oder Entladeart zu wählen.

9. Computerprogramm mit Anweisungen, die, wenn das Programm von einem Computer ausgeführt wird, die Ausführung der Verfahrensschritte nach einem der Ansprüche 1-4 durch den Computer bewirken.

10. Speichermittel, die von einem Computer gelesen werden können und Anweisungen enthalten, die, wenn sie von einem Computer ausgeführt werden, die Ausführung der Verfahrensschritte nach einem der Ansprüche 1-4 durch den Computer bewirken.

## Revendications

1. Procédé de prélèvement d'un panneau (P) de la station de sortie (3) d'une machine (M) pour l'usinage de panneaux (P) en bois, céramique, verre, fibre de verre, plastique, métal et similaires, comprenant: un plan de travail (21) pour supporter chaque panneau (P), ledit panneau (P) pouvant être chargé et/ou déchargé selon un premier et un deuxième mode de chargement et/ou de déchargement; au moins une unité de travail (2) comprenant au moins un outil de travail (23) pour travailler ledit panneau (P), au moins un élément de verrouillage (22) pour verrouiller ledit panneau (P) pendant le travail, au moins un élément de protection (24), capable d'empêcher le contact entre ledit au moins un outil de travail (23) et un opérateur, ledit procédé étant **caractérisé en ce que** ledit premier mode de chargement et/ou de déchargement est un mode de chargement et/ou de déchargement automatique dudit panneau (P), effectué au moyen d'un dispositif de prélèvement automatique (D), notamment un robot, **en ce que** lorsque ledit panneau (P) est chargé et/ou déchargé selon ledit premier mode de chargement et/ou de déchargement, ledit procédé comprend les étapes suivantes:
1. placer ledit panneau (P) sur ledit plan de travail (21) dans une position prédéterminée de manière à permettre son fonctionnement;
2. verrouiller, au moyen dudit au moins un élément de verrouillage (22), ledit panneau (P) dans une position sur ledit plan de travail (21);
3. effectuer, au moyen dudit au moins un outil de travail (23), un travail dudit panneau (P);
4. libérer, au moyen dudit au moins un élément de verrouillage (22), ledit panneau (P) verrouillé à l'étape de verrouillage 2; et
5. prélever ledit panneau (P) travaillé dans ladite étape de travail 3; **caractérisé en ce que** ledit deuxième mode de chargement et/ou de déchargement est un mode de chargement et/ou de déchargement manuel effectué par un opérateur, et **en ce que**, lorsque ledit panneau (P) est chargé et/ou déchargé selon ledit deuxième mode de chargement et/ou de déchargement, ledit procédé comprend les sous-étapes suivantes:
*1*.*1* placer, après ladite étape de placement 1., ledit au moins un élément de protection (24) dans une première position, dans laquelle ledit au moins un élément de protection (24) forme une barrière de protection de l'outil de travail (23); et
*3*.*1* placer, après ladite étape de travail 3., ledit au moins un élément de protection (24) dans une deuxième position, dans laquelle ledit au moins un élément de protection (24) découvre ledit outil de travail (23).

2. Procédé selon la revendication précédente, **caractérisé en ce qu'**il comprend, avant ladite étape de placement 1, l'étape supplémentaire suivante:
*0*. détecter si ledit panneau (P) est chargé et/ou déchargé selon ledit premier mode de chargement et/ou de déchargement ou selon ledit deuxième mode de chargement et/ou de déchargement.

3. Procédé selon l'une quelconque des revendications précédentes, **caractérisé en ce qu'**il comprend, avant ladite étape de placement 1., l'étape préliminaire suivante:
- enregistrer un ou plusieurs programmes de travail à réaliser sur chaque panneau (P).

4. Procédé selon l'une quelconque des revendications précédentes, **caractérisé en ce qu'**il comprend, après ladite étape de prélèvement 5., l'étape supplémentaire suivante:
*6*. l'échange de données de fonctionnement de ladite machine (M) avec un ou plusieurs dispositifs électroniques mobiles (E) et/ou une infrastructure en nuage (C).

5. Machine (M) pour l'usinage de panneaux (P) en bois, céramique, verre, fibre de verre, plastique, métal et similaires, comprenant une station de chargement de panneaux (P); un plan de travail (21) pour supporter au moins un panneau (P); un système de déplacement pour déplacer ledit panneau (P) de ladite station de chargement vers une unité de travail (2); une unité de travail (2) comprenant un groupe de coupe comprenant au moins un outil de travail (23) pour couper ledit panneau (P) le long d'une ligne de coupe (T); au moins un élément de verrouillage (22) pour verrouiller ledit panneau (P) pendant le travail; et au moins un élément de protection (24), capable d'empêcher le contact entre ledit au moins un outil de travail (23) et un opérateur; **caractérisé par** une unité de contrôle logique (UM) configurée pour exécuter l'étape préliminaire et les étapes du procédé selon l'une quelconque des revendications précédentes.

6. Machine (M) selon la revendication précédente, **caractérisée en ce que** ladite unité de contrôle logique (UM) est configurée pour sélectionner une voie de chargement et/ou de déchargement entre ladite première et ladite deuxième voie de chargement et/ou de déchargement.

7. Machine (M) selon la revendication précédente, **caractérisée en ce qu'**elle comprend au moins un capteur configuré pour détecter la présence d'un opérateur dans une zone déterminée de ladite machine (M) et pour envoyer un signal de présence/absence dudit opérateur à ladite unité de contrôle logique (UM), et **en ce que** ladite unité de contrôle logique (UM) est configurée pour sélectionner une voie de chargement et/ou de déchargement entre ladite première et ladite deuxième voie de chargement et/ou de déchargement en fonction dudit signal de présence/absence dudit opérateur reçu par ledit au moins un capteur.

8. Machine (M) selon l'une des revendications 5 à 7, **caractérisée en ce qu'**elle comprend un panneau de commande (8) connecté de manière opérationnelle à ladite unité de contrôle logique (UM), dans laquelle ledit panneau de commande (8) comprend des moyens de sélection permettant à l'opérateur de sélectionner une voie de chargement et/ou de déchargement entre ladite première et ladite deuxième voie de chargement et/ou de déchargement.

9. Programme informatique comprenant des instructions qui, lorsque le programme est exécuté par un ordinateur, entraînent l'exécution par l'ordinateur des étapes du procédé selon l'une quelconque des revendications 1 à 4.

10. Moyen de stockage lisible par un ordinateur comprenant des instructions qui, lorsqu'elles sont exécutées par un ordinateur, entraînent l'exécution par l'ordinateur des étapes du procédé selon l'une des revendications 1 à 4.
